# FASCICULE DE BREVET EUROPEEN

(11) **EP 1 290 936 B1**
(45) Date de publication et mention de la délivrance du brevet: **12.04.2006**
(21) Numéro de dépôt: 02360258.4
(22) Date de dépôt: 04.09.2002
(51) Int. Cl.: A01D 78/10

(54) **Machine de fenaison**
Heuwerbungsmaschine
Haymaking machine

(30) Priorité: 06.09.2001 FR 0111659
(43) Date de publication de la demande: 12.03.2003
(73) Titulaire: KUHN S.A., 67706 Saverne Cedex (FR)
(72) Inventeur: Kohser, Frédéric, 67310 Westhoffen (FR); Breneur, David, 67700 Saverne (FR)
(74) Mandataire: Andres, Jean-Claude

(56) Documents cités:
- EP-A- 0 517 632
- EP-A- 1 095 555
- DE-A- 19 916 759
- US-A- 5 069 022

## Description

La présente invention se rapporte à une machine de fenaison, notamment pour l'andainage de fourrage, comportant un bâti portant plusieurs rotors d'andainage pouvant être entraînés en rotation autour d'axes supports sensiblement verticaux, lesquels rotors sont liés à des bras porteurs qui sont articulés sur le bâti au moyen d'axes d'articulation autour desquels ils peuvent être déplacés d'une position de travail sensiblement horizontale dans une position de transport sensiblement verticale et vice versa, lesdits bras porteurs étant réalisés en deux parties télescopiques dont la première est liée à l'axe d'articulation sur le bâti et la deuxième porte le rotor correspondant, cette deuxième partie pouvant coulisser par rapport à ladite première partie pour faire varier la position du rotor correspondant par rapport au bâti entre une position intérieure où son axe support se situe à une distance minimale de l'axe d'articulation du bras porteur correspondant et une position extérieure où son axe support se situe à une distance maximale dudit axe d'articulation.

Une machine connue de ce genre comporte quatre rotors disposés de manière à former une première paire qui est située vers l'avant du bâti et une seconde paire qui est située vers l'arrière du bâti. En position de travail, ces rotors forment un V et rassemblent le fourrage en un andain central. La largeur de travail maximale est atteinte lorsque les parties télescopiques des bras porteurs sont totalement étirées pour amener les rotors dans leurs positions extérieures. Cette largeur de travail maximale dépend de la course des deuxièmes parties des bras télescopiques qui portent les rotors situés vers l'avant du bâti. Ladite course est cependant limitée par le fait qu'en position étirée il faut conserver un recouvrement correct entre les premières parties et les deuxièmes parties télescopiques des bras porteurs et le fait que la longueur desdites parties est également limitée afin de ne pas dépasser, en position de transport, la hauteur admise pour les déplacements sur les voies publiques.

La largeur de travail maximale qui peut ainsi être obtenue avec cette machine connue n'est pas suffisante pour former, en un seul passage, un andain dont le volume est approprié à la grande capacité de traitement des machines telles que les ensileuses automotrices actuellement disponibles.

Sur une autre machine connue chaque bras porteur d'un des rotors de la première paire est monté sur un châssis supplémentaire. Celui-ci est déplacable latéralement sur le bâti principal de la machine en vue de pouvoir augmenter la largeur de travail maximale. Une telle construction complique et renchérit considérablement la machine.

La présente invention a pour but de remédier aux inconvénients précités des machines connues. Elle doit notamment proposer une machine permettant d'obtenir d'une manière simple une très grande largeur de travail.

A cet effet une importante caractéristique de l'invention consiste en ce que la première partie télescopique d'au moins chaque bras porteur d'un des rotors de la première paire comporte une section de guidage supplémentaire qui s'étend au-delà de l'axe support du rotor correspondant lorsque celui-ci se situe dans la position intérieure et dont la longueur est telle qu'elle permet de guider la deuxième partie télescopique jusque dans une position extérieure où la valeur de la distance de l'axe support du rotor jusqu'à l'axe d'articulation du bras porteur correspondant est sensiblement le double de la valeur de cette distance lorsque le rotor est dans ladite position intérieure.

Cet agencement permet de doubler d'une manière simple la largeur de travail de la machine en la faisant passer de la position minimale à la position maximale. Dans cette dernière position, la machine peut réaliser des andains de très gros volume à chaque passage. Par ailleurs, lors de la mise en position de transport, les bras porteurs peuvent conserver la longueur qu'ils ont dans la position minimale. La hauteur alors atteinte avec ces bras reste dans les limites admises pour le transport.

D'autres caractéristiques et avantages de l'invention ressortiront des revendications et de la description ci-après d'un exemple de réalisation non limitatif de l'invention, avec références aux dessins annexés dans lesquels :
- la figure 1 représente une vue de dessus d'une machine selon l'invention,
- la figure 2 représente une vue de détail d'un bras porteur en position minimale,
- la figure 3 représente une vue de détail d'un bras porteur en position allongée au maximum,
- la figure 4 représente une vue de détail d'un bras porteur en position de transport.

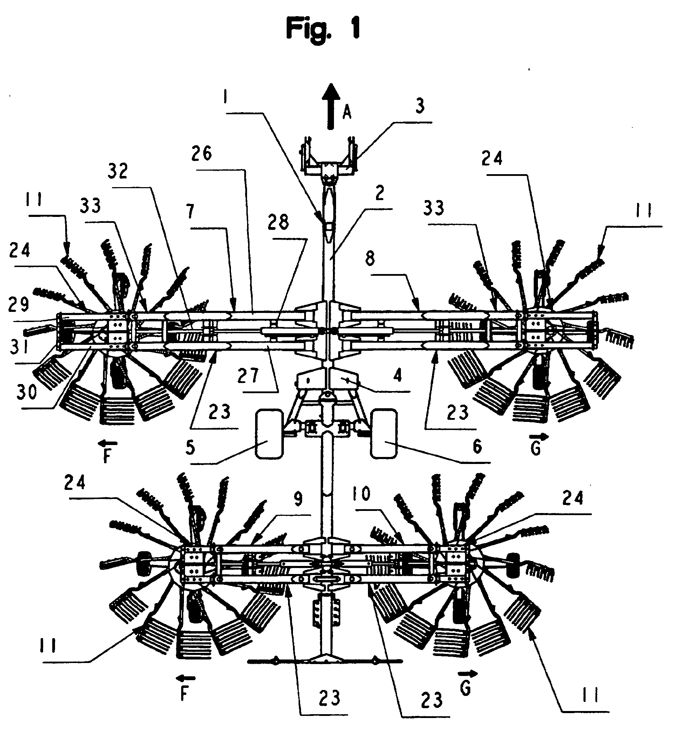

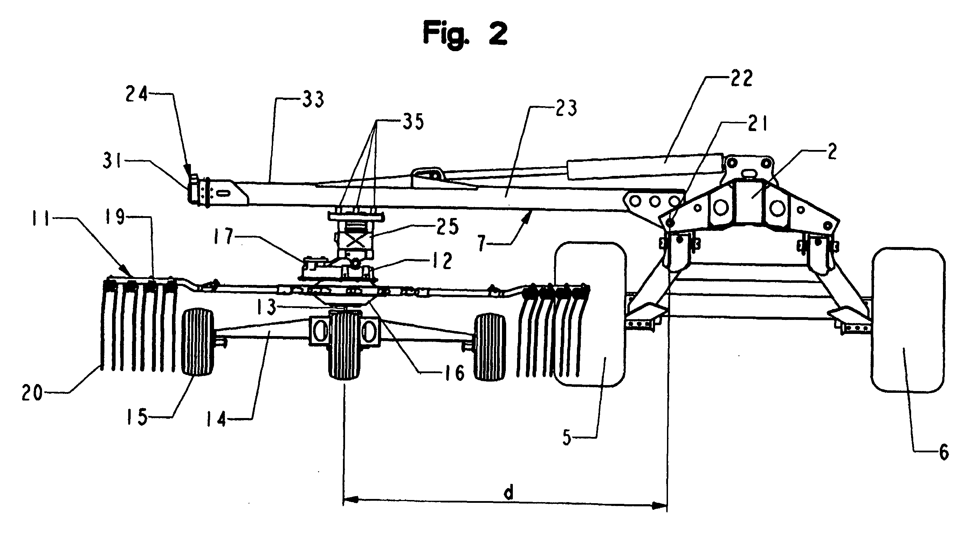

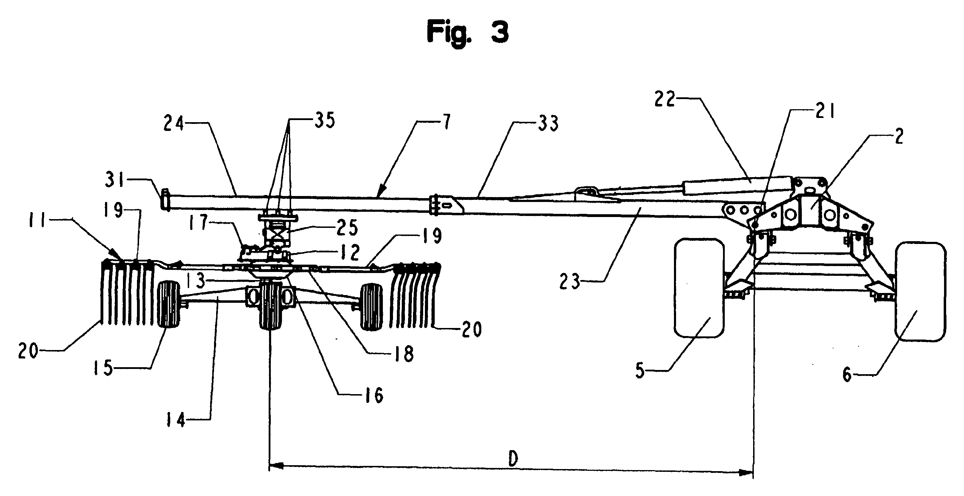

Telle qu'elle est représentée sur les figures 1 à 4, la machine selon l'invention comporte un bâti (1). Celui-ci est constitué par une poutre centrale (2) qui possède à son extrémité avant un dispositif d'accouplement (3) pour l'accrocher à un tracteur d'entraînement et vers son milieu une traverse (4) avec deux roues de déplacement (5 et 6) qui reposent sur le sol. Le bâti (1) comporte quatre bras (7, 8, 9, 10) portant chacun un rotor (11) destiné à andainer des produits tels que de l'herbe ou de la paille fauchée se trouvant sur le sol.

Chaque rotor (11) possède un carter (12) qui est relié au bras porteur (7, 8, 9, 10) correspondant d'une manière qui sera décrite ultérieurement. Dans ce carter (12) est logé un axe support (13) sensiblement vertical. Cet axe (13) s'étend vers le bas et porte à son extrémité inférieure un chariot (14) équipé de roues porteuses (15) situées sous le rotor (11). Sur la partie de l'axe (13) qui est comprise entre le carter (12) et le chariot (14) est disposé un boîtier (16). Il est monté sur l'axe support (13) de telle sorte qu'il puisse tourner sur celui-ci. Le côté supérieur du boîtier (16) est muni d'une couronne dentée qui se situe sous le carter (12). Cette couronne engrène avec un pignon d'entraînement qui se trouve également sous le carter (12). Le dit pignon est solidaire d'un arbre qui s'étend hors de ce carter (12) et qui est relié à un moteur hydraulique (17) qui assurent l'entraînement en rotation. Le dit arbre pourrait aussi être relié, à l'aide d'arbres de transmission, à un arbre de prise de force du tracteur.

Le boîtier (16) est muni de paliers (18) à travers lesquels passent des bras (19). Ceux-ci s'étendent en forme de rayons et portent à leurs extrémités extérieures des outils d'andainage (20) constitués par des fourches. Ils sont logés dans lesdits paliers (18) de manière à pouvoir tourner sur eux-mêmes. Sur la partie de l'axe (13) qui se situe dans le boîtier (16) est montée une came fixe destinée à commander les bras porte-outils (19) durant le travail d'andainage. Pour cela chacun de ces bras (19) possède à son extrémité qui s'étend à l'intérieur du boîtier (16) un levier avec un galet qui est guidé d'une manière connue dans une gorge de la came.

Les bras porteurs (7, 8, 9, 10) sont articulés sur la poutre centrale (2) au moyen d'axes d'articulation (21) sensiblement horizontaux et dirigés dans la direction d'avancement (A). A chaque bras porteur (7, 8, 9 et 10) est associé un vérin hydraulique (22) qui permet de le déplacer autour de son axe d'articulation (21), pour l'amener d'une position de travail sensiblement horizontal dans une position de transport sensiblement verticale et vice versa. Ces vérins hydrauliques (22) sont articulés sur le bras porteur (7, 8, 9 ou 10) correspondant et sur la poutre (2). Ils peuvent être reliés au dispositif hydraulique du tracteur et être commandés depuis celui-ci.

Deux bras porteurs (7 et 8) se situent vers l'avant de la poutre centrale (2) et les deux autres bras (9 et 10) vers l'arrière de celle-ci. Ils sont tous réalisés en deux parties télescopiques (23 et 24). La première partie (23) est liée à l'axe d'articulation (21) sur la poutre (2) et la deuxième partie (24) porte le rotor (11) correspondant. Celui-ci est relié à cette deuxième partie (24) par l'intermédiaire d'un dispositif de liaison articulé (25) lui permettant de suivre les dénivellations du sol. Chaque deuxième partie (24) peut coulisser par rapport à la première partie (23) pour faire varier la position du rotor (11) correspondant par rapport à la poutre (2) entre une position intérieure où son axe support (13) se situe à une distance minimale (d) de l'axe d'articulation (21) sur la poutre (2) et une position extérieure où son axe support (13) se situe à une distance maximale (D) dudit axe d'articulation (21). La première partie télescopique (23) de chaque bras porteur (7, 8, 9 et 10) est réalisée en deux tubes (26 et 27) sensiblement parallèles et reliés entre eux par des traverses (28). La deuxième partie télescopique (24) de chaque bras porteur (7, 8,9 et 10) est également réalisée en deux tubes (29 et 30) sensiblement parallèles et reliés entre eux par une traverse (31) située près de leurs extrémités extérieures. Ces tubes (29 et 30) sont engagés dans les tubes (26 et 27) précités de la première partie (23) et peuvent coulisser dans ces derniers. Chaque bras porteur (7, 8, 9 et 10) comporte un vérin hydraulique (32) qui est relié à la traverse (28) qui se situe près de l'extrémité intérieure de la première partie télescopique (23) et à la traverse (31) qui se situe près de l'extrémité extérieure de la deuxième partie télescopique (24). Ce vérin (32) se situe avantageusement entre les tubes (26, 27, 29 et 30) qui constituent les parties télescopiques (23 et 24). Ces vérins hydrauliques (32) assurent les déplacements des deuxièmes parties télescopiques (24) pour allonger ou raccourcir les bras porteurs (7, 8, 9 et 10). Pour cela, ils peuvent être reliés, au moyen de tuyaux, au dispositif hydraulique du tracteur.

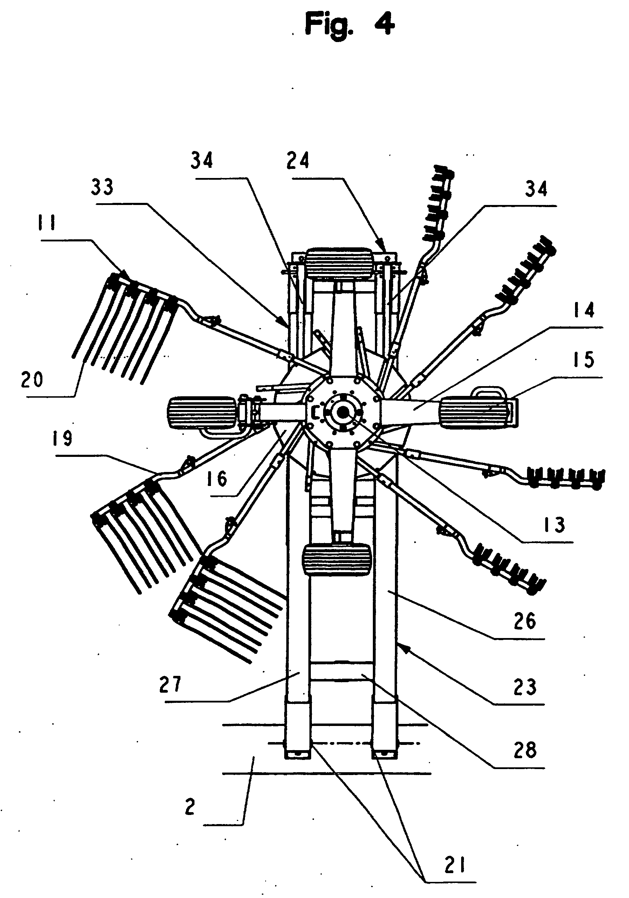

Les premières parties télescopiques (23) des bras porteurs (7 et 8) situés les plus en avant de la poutre (2), comportent une section de guidage supplémentaire (33) qui s'étend dans son prolongement au-delà de l'axe support (13) du rotor (11) correspondant lorsque celui-ci se situe en position intérieure. La longueur de chaque section de guidage (33) est telle qu'elle permet de guider la deuxième partie télescopique (24) jusque dans une position où la valeur de la distance (D) est sensiblement le double de la valeur de la distance (d). Cette section de guidage supplémentaire (33) prolonge la première partie télescopique (23) d'une longueur égale à environ la moitié de la distance (d). Elle est en forme de tubes similaires aux tubes (26 et 27) avec, sur leur côté dirigé vers le bas, des ouvertures (34) qui s'étendent sur sensiblement toute leur longueur (voir figure 4). A travers ces ouvertures (34) passent des pattes de fixation (35) qui relient le dispositif de liaison articulé (25) du rotor (11) correspondant à la deuxième partie télescopique (24). Cette deuxième partie (24) a sensiblement la même longueur que la première partie (23) avec la section de guidage (33) comprise. Le guidage entre les deux parties est ainsi optimal dans toutes les positions. En sus, le vérin hydraulique (32) qui déplace la deuxième partie (24) est relativement long, ce qui lui permet d'avoir une course importante.

L'agencement précité permet d'allonger les bras porteurs (7 et 8) d'une distance telle que la largeur de travail puisse être doublée entre la position intérieure et la position extérieure. Il permet aussi de les raccourcir suffisamment pour qu'ils ne dépassent pas, en position de transport, la hauteur autorisée.

Durant le travail, la machine est déplacée dans la direction d'avancement A. Les bras porteurs (7 à 10) sont abaissés en position sensiblement horizontale et les roues (15) des rotors (11) se déplacent sur le sol. Ces rotors (11) sont disposés de manière à former un V (voir figure 1). Ils sont entraînés en rotation de sorte qu'ils tournent dans le sens des flèches F et G. Les outils (20) des deux rotors (11) les plus en avant sont commandés par leurs cames respectives de manière à ce qu'ils ramassent le fourrage sur les moitiés avant de leurs trajectoires, le déplacent vers la poutre (2) et le déposent sous la forme d'andains. Les outils (20) des deux rotors (11) les plus en arrière sont commandés pareillement. Ils ramassent tout le fourrage se trouvant sur leurs trajectoires, y compris celui déposé par les deux rotors précédents, et le rassemblent pour former un andain central de gros volume.

La largeur de travail obtenue avec les rotors (11) peut être modifiée à l'aide des bras porteurs télescopiques (7 à 10) notamment en fonction de la capacité de traitement de la presse ou de l'ensileuse qui est utilisée pour ramasser l'andain. Pour augmenter le volume de l'andain, les deux bras (7 et 8) des rotors (11) les plus en avant peuvent être allongés de manière à amener les rotors correspondants dans la position extérieure où la largeur de travail est pratiquement doublée par rapport à la position intérieure. Dans cette position extérieure, les deuxièmes parties télescopiques (24) des bras porteurs (7 et 8) sont tenues par les sections de guidage supplémentaires (33). La largeur de travail peut alors être voisine de quinze mètres. Dans leur position intérieure, lesdits rotors (11) se situent en dessous des sections de guidage supplémentaires (33), leurs pattes de fixation (35) passant à travers les ouvertures (34). La largeur de travail minimale n'est ainsi pas limitée par la longueur des dites partie (23) et section (33) qui serve à guider les deuxièmes parties (24).

La largeur de travail des deux rotors (11) les plus en arrière peut être inférieure à celle des rotors (11) les plus en avant. L'allongement maximal de leurs bras porteurs (9 et 10) peut ainsi être relativement court, de telle sorte que les deuxièmes parties (24) soient tenues correctement dans les premières parties (23) elles-mêmes. Il est néanmoins possible de prévoir le même type de bras porteurs à l'arrière qu'à l'avant.

Pour le transport, les bras porteurs (7 à 10) sont raccourcis au maximum et sont relevés au moyen des vérins (22) dans une position sensiblement verticale pour réduire l'encombrement de la machine. Ce raccourcissement maximal correspond à la position dans laquelle les rotors (11) sont ramenés au plus près de la poutre (2) et se situent à la distance (d) des axes d'articulation (21) de leurs bras porteurs (7 à 10). Dans cette position, il est en plus possible de démonter ou replier les bras porte-outils (19) qui sont dirigés vers le haut, afin de réduire davantage la hauteur de la machine.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini dans les revendications.

## Revendications

1. Machine de fenaison, notamment pour l'andainage de fourrage, comportant un bâti (1) portant plusieurs rotors d'andainage (11) pouvant être entraînés en rotation autour d'axes supports (13) sensiblement verticaux, lesquels rotors (11) sont liés à des bras porteurs (7, 8, 9, et 10) qui sont articulés sur le bâti (1) au moyen d'axes d'articulation (21) autour desquels ils peuvent être déplacés d'une position de travail sensiblement horizontale dans une position de transport sensiblement verticale et vice versa, lesdits bras porteurs (7 à 10) étant chacun réalisé en deux parties télescopiques (23 et 24) dont la première (23) est liée à l'axe d'articulation (21) sur le bâti (1) et la deuxième (24) porte le rotor (11) correspondant, cette deuxième partie (24) pouvant coulisser par rapport à la dite première partie (23) pour faire varier la position du rotor (11) correspondant par rapport au bâti (1) entre une position intérieure où son axe support (13) se situe à une distance minimale (d) de l'axe d'articulation (21) du bras porteur (7 à 10) correspondant et une position extérieure où son axe support (13) se situe à une distance maximale (D) dudit axe d'articulation (21), ***caractérisée par le fait que*** la première partie télescopique (23) d'au moins un bras porteur (7 à 10) comporte une section de guidage supplémentaire (33) qui s'étend dans son prolongement au-delà de l'axe support (13) du rotor (11) correspondant lorsque celui-ci se situe en position intérieure et dont la longueur est telle qu'elle permet de guider la deuxième partie télescopique (24) correspondante jusque dans une position extérieure où la valeur de la distance (D) est sensiblement le double de la valeur de la distance (d).

2. Machine selon la revendication 1, ***caractérisée par le fait que*** les premières parties télescopiques (23) des bras porteurs (7 et 8) des deux rotors (11) les plus en avant comportent une section de guidage supplémentaire (33).

3. Machine selon la revendication 2, ***caractérisée par le fait que*** la section de guidage supplémentaire (33) a une longueur égale à environ la moitié de la distance (d) entre l'axe support (13) du rotor (11) correspondant en position intérieure et l'axe d'articulation (21) du bras porteur (7,8) correspondant.

4. Machine selon la revendication 3, ***caractérisée par le fait que*** la section de guidage supplémentaire (33) comporte des ouvertures (34) qui s'étendent sur toute sa longueur.

5. Machine selon la revendication 2, ***caractérisée par le fait* que** la deuxième partie télescopique (24) des bras porteurs (7, 8) comporte des pattes de fixation (35) pour le rotor (11) correspondant.

6. Machine selon les revendications 4 et 5, ***caractérisée par le fait* que** les pattes de fixation (35) des rotors (11) se situent dans les ouvertures (34) des sections de guidage (33) des premières parties télescopiques (23) lorsque les bras porteurs (7 et 8) sont en position intérieure.

7. Machine selon l'une quelconque des revendications précédentes, ***caractérisée par le fait* que** la première partie télescopique (23) de chaque bras porteur (7 à 10) est réalisée en deux tubes (26 et 27) sensiblement parallèles et reliés entre eux par des traverses (28).

8. Machine selon l'une quelconque des revendications précédentes, ***caractérisée par le fait* que** la deuxième partie télescopique (24) de chaque bras porteur (7 à 10) est réalisée en deux tubes (29 et 30) sensiblement parallèles et reliés entre eux par une traverse (31).

9. Machine selon l'une quelconque des revendications précédentes, ***caractérisée par le fait* que** la première partie télescopique (23) avec la section de guidage supplémentaire (33) comprise et la deuxième partie télescopique (24) des bras porteurs (7 et 8) ont sensiblement la même longueur.

10. Machine selon l'une quelconque des revendications précédentes, ***caractérisée par le fait que*** chaque bras porteur (7 à 10) comporte un vérin hydraulique (32) qui est relié à une traverse (28) située près de l'extrémité intérieure de la première partie télescopique (23) et à la traverse (31) située à l'extrémité extérieure de la deuxième partie télescopique (24).

11. Machine selon la revendication 10, ***caractérisée par le fait que*** le vérin hydraulique (32) se situe entre les tubes (26, 27, 29 et 30) qui constituent les parties télescopiques (23 et 24) de chaque bras porteur (7 à 10).

## Claims

1. Haymaking machine, particularly for windrowing forage, comprising a frame (1) carrying several windrowing rotors (11) which can be driven in rotation about substantially vertical support axes (13), which rotors (11) are connected to carrier arms (7, 8, 9 and 10) which are articulated to the frame (1) by means of articulation axes (2) about which they can be moved from a substantially horizontal work position into a substantially vertical transport position and vice versa, the said carrier arms (7 to 10) each being made in two telescopic parts (23 and 24) of which the first (23) is connected to the axis of articulation (21) on the frame (1) and the second (24) carries the corresponding rotor (11), it being possible for this second part (24) to slide with respect to the said first part (23) in order to vary the position of the corresponding rotor (11) with respect to the frame (1) between an inner position in which its support axis (13) is located at a minimum distance (d) from the articulation axis (21) of the corresponding carrier arm (7 to 10) and an outer position in which its support axis (13) is located at a maximum distance (D) from said articulation axis (21), ***characterized in* that** the first telescopic part (23) of at least one carrier arm (7 to 10) comprises an additional guide section (33) which extends in its continuation beyond the support axis (13) of the corresponding rotor (11) when the latter is located in the inner position and the length of which is such that it allows the corresponding second telescopic part (24) to be guided as far as an outer position in which the value of the distance (D) is substantially twice the value of the distance (d).

2. Machine as claimed in claim 1, ***characterized in* that** the first telescopic part (23) of the carrier arms (7 and 8) of the two furthest forward rotors (11) comprise an additional guide section (33).

3. Machine as claimed in claim 2, ***characterized in* that** the additional guide section (33) has a length equal to approximately half the distance (d) between the support axis (13) of the corresponding rotor (11) in the inner position and the articulation axis (21) of the corresponding carrier arm (7, 8).

4. Machine as claimed in claim 3, ***characterized in* that** the additional guide section (33) has openings (34) which extend along its entire length.

5. Machine as claimed in claim 2, ***characterized in* that** the second telescopic part (24) of the carrier arms (7, 8) comprises fixing lugs (35) for the corresponding rotor (11).

6. Machine as claimed in claims 4 and 5, ***characterized in* that** the fixing lugs (35) for the rotors (11) are situated in the openings (34) of the guide sections (33) of the first telescopic parts (23) when the carrier arms (7 and 8) are in the inner position.

7. Machine as claimed in any one of the preceding claims, ***characterized in* that** the first telescopic part (23) of each carrier arm (7 to 10) is produced in two tubes (26 and 27) which are substantially parallel and connected together by cross-beams (28).

8. Machine as claimed in any one of the preceding claims, ***characterized in* that** the second telescopic part (24) of each carrier arm (7 to 10) is made in two tubes (29 and 30) which are substantially parallel and connected together by a cross-beam (31).

9. Machine as claimed in any one of the preceding claims, ***characterized in* that** the first telescopic part (23) with the additional guide section (33) included and the second telescopic part (24) of the carrier arms (7 and 8) have substantially the same length.

10. Machine as claimed in any one of the preceding claims, ***characterized in* that** each carrier arm (7 to 10) comprises a hydraulic ram (32) which is connected to a cross-beam (28) located near the inner end of the first telescopic part (23) and to the cross-beam (31) located at the outer end of the second telescopic part (24).

11. Machine as claimed in claim 10, ***characterized in* that** the hydraulic ram (32) is located between the tubes (26, 27, 29 and 30) which constitute the telescopic parts (23 and 24) of each carrier arm (7 to 10).

## Patentansprüche

1. Heuwerbungsmaschine, insbesondere zum Schwaden von Futter, mit einem Rahmen (1), der mehrere Schwadrotoren (11) trägt, die in Drehung um im Wesentlichen vertikale Stützachsen (13) angetrieben werden können, wobei die Rotoren (11) mit Tragarmen (7, 8, 9 und 10) verbunden sind, die am Gestell (1) mit Hilfe von Gelenkachsen (21) angelenkt sind, um die sie von einer im Wesentlichen horizontalen Arbeitsposition in eine im Wesentlichen vertikale Transportposition und umgekehrt verschoben werden können, wobei die Tragarme (7 bis 10) jeweils in zwei Teleskopteilen (23 und 24) ausgeführt sind, von denen der erste (23) mit der Gelenkachse (21) an dem Rahmen (1) verbunden ist und der zweite (24) den entsprechenden Rotor (11) trägt, wobei dieser zweite Teil (24) in Bezug auf den ersten Teil (23) gleiten kann, um die Position des entsprechenden Rotors (11) in Bezug auf den Rahmen (1) zwischen einer inneren Position, in der sich seine Stützachse (13) in einem Mindestabstand (d) zur Gelenkachse (21) des entsprechenden Tragarms (7 bis 10) befindet, und einer äußeren Position, in der sich seine Stützachse (13) in einem Höchstabstand (D) zu der Gelenkachse befindet (21), zu verändern, ***dadurch gekennzeichnet,* dass** der erste Teleskopteil (23) von mindestens einem Tragarm (7 bis 10) einen zusätzlichen Führungsabschnitt (33) umfasst, der sich in seiner Verlängerung über die Stützachse (13) des entsprechenden Rotors (11) hinaus erstreckt, wenn sich dieser in der inneren Position befindet, und dessen Länge derart ist, dass sie es ermöglicht, den zweiten entsprechenden Teleskopteil (24) bis in eine äußere Position zu führen, in der der Wert des Abstandes (D) im Wesentlichen das Doppelte des Wertes des Abstandes (d) ist.

2. Maschine nach Anspruch 1, ***dadurch gekennzeichnet,* dass** die ersten Teleskopteile (23) der Tragarme (7 und 8) der beiden am weitesten vorne befindlichen Rotoren (11) einen zusätzlichen Führungsabschnitt (33) umfassen.

3. Maschine nach Anspruch 2, ***dadurch gekennzeichnet,* dass** der zusätzliche Führungsabschnitt (33) eine Länge gleich ungefähr der Hälfte des Abstandes (d) zwischen der Stützachse (13) des entsprechenden Rotors (11) in der inneren Position und der Gelenkachse (21) des entsprechenden Tragarms (7, 8) aufweist.

4. Maschine nach Anspruch 3, ***dadurch gekennzeichnet,* dass** der zusätzliche Führungsabschnitt (33) Öffnungen (34) umfasst, die sich über seine ganze Länge erstrecken.

5. Maschine nach Anspruch 2, ***dadurch gekennzeichnet,* dass** der zweite Teleskopteil (24) der Tragarme (7, 8) Befestigungseisen (35) für den entsprechenden Rotor (11) umfasst.

6. Maschine nach den Ansprüchen 4 und 5, ***dadurch gekennzeichnet,* dass** sich die Befestigungseisen (35) der Rotoren (11) in den Öffnungen (34) der Führungsabschnitte (33) der ersten Teleskopteile (23) befinden, wenn sich die Tragarme (7 und 8) in der inneren Position befinden.

7. Maschine nach irgend einem der vorhergehenden Ansprüche, ***dadurch gekennzeichnet,* dass** der erste Teleskopteil (23) jedes Tragarms (7 bis 10) in zwei im Wesentlichen parallelen Rohren (26 und 27) ausgeführt ist, die durch Querstreben (28) miteinander verbunden sind.

8. Maschine nach irgend einem der vorhergehenden Ansprüche, ***dadurch gekennzeichnet,* dass** der zweite Teleskopteil (24) jedes Tragarms (7 bis 10) in zwei im Wesentlichen parallelen Rohren (29 und 30) ausgeführt ist, die durch eine Querstrebe (31) miteinander verbunden sind.

9. Maschine nach irgend einem der vorhergehenden Ansprüche, ***dadurch gekennzeichnet,* dass** der erste Teleskopteil (23) inklusive des zusätzlichen Führungsabschnittes (33) und der zweite Teleskopteil (24) der Tragarme (7 und 8) im Wesentlichen dieselbe Länge haben.

10. Maschine nach irgend einem der vorhergehenden Ansprüche, ***dadurch gekennzeichnet,* dass** jeder Tragarm (7 bis 10) einen Hydraulikzylinder (32) umfasst, der mit einer Querstrebe (28), die sich in der Nähe des inneren Endes des ersten Teleskopteils (23) befindet, und mit der Querstrebe (31) verbunden ist, die sich am äußeren Ende des zweiten Teleskopteils (24) befindet.

11. Maschine nach Anspruch 10, ***dadurch gekennzeichnet,* dass** sich der Hydraulikzylinder (32) zwischen den Rohren (26, 27, 29 und 30) befindet, die die Teleskopteile (23 und 24) jedes Tragarms (7 bis 10) darstellen.
